Europäisches Patentamt

**European Patent Office**

**Office européen des brevets**

(11) Numéro de publication: **0 303 525 B1**

(12) **FASCICULE DE BREVET EUROPEEN**

(45) Date de publication de fascicule du brevet: **15.07.92**

(51) Int. Cl.⁵: **B01J 37/16**, B01J 23/40, B01J 23/74, C10G 45/40

(21) Numéro de dépôt: **88400695.8**

(22) Date de dépôt: **23.03.88**

Le dossier contient des informations techniques présentées postérieurement au dépôt de la demande et ne figurant pas dans le présent fascicule.

(54) **Procédé de réduction d'un catalyseur de raffinage avant sa mise en oeuvre.**

(30) Priorité: **14.08.87 FR 8711633**

(43) Date de publication de la demande:
**15.02.89 Bulletin 89/07**

(45) Mention de la délivrance du brevet:
**15.07.92 Bulletin 92/29**

(84) Etats contractants désignés:
**AT BE DE GB IT LU NL SE**

(56) Documents cités:
**EP-A- 0 126 676**
**FR-A- 2 077 907**
**FR-A- 2 413 935**
**GB-A- 2 052 556**

(73) Titulaire: **EUROPEENNE DE RETRAITEMENT DE CATALYSEURS (en abrégé EURECAT)**
**Ouai Jean Jaurès - Boite Postale 45**
**F-07800 LA VOULTE SUR RHONE(FR)**

(72) Inventeur: **Berrebi, Georges**
**17, rue Barnave**
**F-26500 Bourg les Valence(FR)**

(74) Mandataire: **Andreeff, François et al**
**INSTITUT FRANCAIS DU PETROLE 4, avenue de Bois-Préau**
**F-92502 Rueil-Malmaison(FR)**

Rank Xerox (UK) Business Services

**Description**

L'invention concerne un prétraitement des catalyseurs de raffinage qu'ils soient à l'état neuf ou qu'ils proviennent d'une unité de régénération ou d'activation ou de réactivation.

Certains des catalyseurs de raffinage doivent généralement être présulfurés et éventuellement réduits en présence d'hydrogène avant de pouvoir être utilisées ou réutilisés dans des réactions de conversion d'hydrocarbures, c'est-à-dire avant d'être mis en contact avec les hydrocarbures ou la charge d'hydrocarbures à traiter. C'est le cas notamment des catalyseurs d'hydrodésulfuration.

D'autres catalyseurs doivent être uniquement réduits à l'hydrogène avant d'être utilisés ou réutilisés dans des réactions de conversion d'hydrocarbures, d'est-à-dire, avant d'être mis en contact avec les hydrocarbures ou la charge d'hydrocarbures à traiter. C'est le cas notamment des catalyseurs d'hydrogénation de coupes oléfines en provenance de craquage à la vapeur. De tels catalyseurs n'ont généralement pas à être présulfurés, le soufre étant d'ailleurs plutôt un poison de ce type de catalyseurs.

L'invention concerne une méthode particulière de réduction de cette deuxième classe de catalyseurs qui renferment généralement un support et une phase active à base d'au moins un métal du groupe VIII de la classification périodique des éléments, ce métal étant soit un métal noble de la famille du platine (platine, palladium, ruthénium, iridium, rhodium et osmium) soit un métal non noble de ce groupe VIII, à savoir, le fer, le cobalt et le nickel, et/ou à base d'au moins un métal du groupe Ib, à savoir, le cuivre ou l'argen ou l'or.

Dans l'art antérieur, de telles réductions sont effectuées en présence d'hydrogène, à une température comprise entre 50 et 500 °C selon les utilisations envisagées pour le catalyseur et selon la nature du catalyseur employé. Pour des catalyseurs au nickel, cobalt ou fer, ces réductions sont effectuées vers 400 °C ; pour des catalyseurs au palladium ou autre métal noble de la famille du platine, ces réductions sont effectuées vers 100 °C.

Ces réductions qui sont nécessaires à la bonne utilisation des catalyseurs d'hydrogénation sont assez contraignantes pour le raffineur. Elles obligent en effet le raffineur à consommer une quantité non négligeable d'hydrogène; ces réactions prennent du temps, car elles durent quelques heures, et elles nécessitent également un temps de refroidissement important du catalyseur puisque les réactions d'hydrogénation proprement dites s'effectuent autour de 20 à 50 °C. Ces problèmes existent depuis des dizaines d'années mais aucune solution n'a pu jusqu'à présent être trouvée, en dehors des solutions consistant à utiliser des réacteurs disposés en parallèle, certains de ces réacteurs étant utilisés à tour de rôle pour les réactions d'hydrogénation de la charge et pour la réduction du catalyseur, d'autres étant utilisés, à tour de rôle, pour la réduction du catalyseur et pour les réactions d'hydrogénation de la charge, avec donc des périodes alternatives de mises en attente des réacteurs de réduction du catalyseur, de refroidissement de ce catalyseur et d'hydrogénation catalytique de la charge.

On notera par contre ce type de problèmes rencontrés ici pour la réduction de catalyseurs d'hydrogénation ne se pose pas pour la réduction des catalyseurs, par exemple, de reformage catalytique ; en effet les catalyseurs de reformage doivent être réduits vers 400 - 500 °C donc à une température qui est de l'ordre des températures des réactions proprement dites de reforming. Il suffit donc ici de placer le catalyseur dans le réacteur de reformage, d'injecter de l'hydrogène aux conditions opératoires d'un reformage pour activer le catalyseur et d'injecter ensuite la charge d'hydrocarbures à traiter. Toutefois, rien n'interdit au raffineur d'utiliser le procédé selon l'invention, s'il l'estime utile pour quelques raisons que ce soit.

La présente invention permet de remédier aux inconvénients précités et d'effectuer une réduction aisée de catalyseurs d'hydrogénation.

Le procédé de l'invention consiste à effectuer la réduction du catalyseur (soit en dehors du réacteur de raffinage, c'est-à-dire, "ex-situ", soit dans le réacteur de raffinage, c'est-à-dire, "in-situ") en trois étapes :

(a) on imprègne le catalyseur entre 0 et 50°C, de préférence entre 0 et 40°C et plus particulièrement entre 10 et 30°C ou à la température ambiante, avec une solution aqueuse ou organique d'un composé qui est un agent réducteur choisi dans le groupe constitué par les aldéhydes renfermant 2 à 14 atomes de carbone par molécule (et de préférence 3 à 12 atomes de carbone), les cétones ou polycétones renfermant 3 à 18 (et de préférence 3 à 12) atomes de carbone par molécule, les éthers renfermant 2 à 14 (de préférence 3 à 12) atomes de carbone par molécule, les alcools ou polyalcools renfermant 1 à 14 atomes (et de préférence 2 à 12) de carbone par molécule et les acides organiques ou polyacides renfermant 1 à 14 (et de préférence 1 à 12 atomes de carbone par molécule), de façon à introduire 10 ppm à 100 % (en poids), de préférence 10 ppm à 50 %, ou plus particulièrement 1 000 ppm à 10 % de ce composé sur le catalyseur.

(b) on élève la température du catalyseur ainsi imprégné à une température comprise entre 100 et 150° C et sous une pression d'1 à 10 bars (de préférence 1,2 à 5 bars et plus particulièremnt 2 à 4 bars, par exemple 3,5 bars), de façon à provoquer un craquage ou une décomposition du composé agent réducteur. Ce craquage ou cette décomposition se traduit par la formation, essentiellement, d'oxyde de carbone qui va provoquer la réduction du catalyseur et provoquer la distribution convenable de la phase active sur le catalyseur. Ce craquage ou décomposition provoque également la formation de vapeur d'eau.

(c) on sèche le catalyseur pour éliminer le solvant d'imprégnation et l'eau formée à l'étape (b).

La température à l'étape (b) ne peut pas dépasser 150° C. La technique utilisée ici se différencie du brevet FR-A-2.413.935 qui propose une activation de catalyseurs par traitement par des composés organiques à une température comprise entre 200 et 800° C.

Le solvant d'imprégnation est généralement l'eau ou tout solvant organique adéquat dans lequel le composé agent réducteur, différent du solvant choisi, est soluble. On peut citer, les alcools, les éthers, etc.

On cite ci-dessous quelques exemples de composés agents réducteurs :

A titre d'aldéhydes, on citera par exemple, l'éthanal, le propanal, le butanal, l'éthyl-2 butanal, le phénoxy-2 propanal, le méthyl-3 butanal, le méthyl-2 pentanal, l'éthyl-2 hexanal, l'heptanal, l'octanal, le nonanal, le décanal, le docécanal, le diméthyl acétal dodécanal, etc.

A titre de cétones, on peut citer par exemple, l'acétone, la butanone-2, la méthyl-3 butanone-2, la pentanone-2, la pentanone-3, l'hexanone-2, la diméthyl-3,3 hexanone-2, la diméthyl-3, 4 hexanone-2, l'hexanone-3, la diméthyl-3,4, hexanone-3, la diméthyl-2,5 hexanone-3, la diméthyl-4,4 hexanone-3, la méthyl-3 hexanone-2, la méthyl-4 hexanone-2, la méthyl-5 hexanone-2, la méthyl-4 hexanone-3, la méthyl-5 hexanone-3, la phényl-1 hexanone-1, l'heptanone-2, l'heptanone-3, l'heptanone-4, la diméthyl-2,6 heptanone-4, l'isopropyl-heptanone-2, la méthyl-3 heptanone-2, la méthyl-6 heptanone-3, la méthyl-2 heptanone-4, la phényl-1 heptanone-1, l'octanone-2, l'octanone-3, l'octanone-4, la méthyl-7 octanone-4, la nonanone-2, la nonanone-4, la nonanone-5, la décanone-2, la décanone-3, la décanone-4, la dodécanone-2, la phényl-1, dodécanone-1.

On peut utiliser des aldéhydes ou des cétones insaturés. On citera à titre d'exemples le buténal-2, l'hexénal-2, la pentène-3 one-2, la pentène-1 diméthyl-5,5 phényl-1 one-3, l'heptène-3 one-2, l'heptène-5 one-2 méthyl-6.

Comme polycétones, on peut utiliser par exemple, la butanédione-2,3 (diméthylglyoxal); le pentadione-2,3; la pentadione-2,4 (acetylacétone); la diméthyl-3,3 pentadione-2,4; l'éthyl-3, pendadione-2,4; l'hexanédione-2,5; la diphényl-1,6 hexanédione-1,6; la tétraméthyl-2,2,5,5 hexadione-3,4; l'heptanédione-2,4; l'heptanétrione-2,4,6; l'octanédione-2,3; l'octanédione-2,7; l'octanédione-3,6; l'octanédione-4,5; la tétraméthyl-2,2,7,7 octanédione-3,6; la diphényl-1,4 butène-2 dione-1,4 (dicétone éthylénique), etc.

A titre d'éther, on citera par exemple :

le diméthyl éther, le diéthyl éther, le méthyl éthyl éther, le méthyl butyl éther, le méthyl t-butyl éther, le méthyl-2 éthyl hexyl éther, l'éthyl butyl éther, l'éthyl t-butyl éther, le di n-propyl éther, l'éther isoamylique, le furanne, le tétranhydrofuranne, le dioxanne, etc.

A titre d'alcool, on citera par exemple :

le méthanol, l'éthanol, le propanol, le n-butanol, l'isobutanol, le pentanol-1, le pentanol-2, le méthyl-2-butanol-4, le méthyl-2 butanol-3, les hexanols, les méthyl-pentanols, les diméthyl-butanols, les heptanols, les octanols ou les alcools amyliques $C_5H_{11}OH$.

A titre d'acide, on citera par exemple, ceux qui correspondent aux aldéhydes, cétones et/ou alcools nommés ci-dessus. On peut citer l'acide lactique ou l'acide citrique, l'acide formique, l'acide propionique.

De préférence, le procédé de la présente invention est effectué "ex-situ". Le catalyseur réduit par des méthodes ne présentant aucun danger (manipulations d'hydrogène supprimées) est alors livré au raffineur complétement prêt à l'emploi, libérant ainsi le raffineur d'opérations délicates et contraignantes comme il a été expliqué plus haut. Il est ainsi possible qu'un raffineur fasse sous-traiter l'opération de réduction de ses catalyseurs, même éventuellement ses catalyseurs de reformage catalytique s'il l'estime utile.

La réduction du catalyseur conformément à l'invention peut être effectuée dans tout appareillage adéquat, en particulier dans un four. Selon une technique judicieuse, la température adéquate de craquage ou de décomposition du composé agent réducteur est obtenue par circulation à travers le lit de catalyseur disposé dans une enceinte (par exemple dans un four ou dans un réacteur) d'un courant de vapeur sèche, ou de tout autre fluide tel que l'azote ou un autre gaz inerte (argon, hélium) ou d'un mélange d'un tel fluide et de vapeur d'eau. Une variante d'appareillage, consiste à disposer dans l'enceinte renfermant le lit catalytique une série de tubes creux qui sont parcourus par un fluide (par exemple de la vapeur et/ou de l'eau chaude) à l'aide duquel on obtient et on contrôle la témpéraurte de craquage ou de décomposition de l'agent réducteur imprégné sur le catalyseur, cette température étant avantageusement fonction de la pression qui règne dans le réacteur. Le réacteur dans lequel se produit la réduction du catalyseur peut être, par exemple, un four rotatif agencé de façon à ce que pendant la rotation, les particules de catalyseur soient amenées à être régulièrement en contact avec les tubes de chauffage.

Précisions encore que les catalyseurs mis en oeuvre dans le procédé, sont choisis parmi les métaux du groupe VIII de la classification périodique des éléments, tels que, par exemple, nickel, cobalt, platine ou palladium ou parmi les métaux du groupe Ib tels que, par exemple, le cuivre ou l'argent ou l'or.

On utilise de préférence souvent le nickel ou le palladium. Ces catalyseurs peuvent être déposés sur des supports inertes et d'une acidité suffisamment faible dans certains cas pour permettre une bonne hydrogénation sélective. Dans ce cas, parmi ces supports, on peut choisir une alumine inerte telle qu'on puisse obtenir un catalyseur fini, comprenant un élément catalytique sur support, lequel a avantageusement une surface comprise entre 1 et 100 m2/g et de préférence entre 50 et 100 m2/g et un volume poreux total compris entre 0,3 et 1 cm3/g. L'acidité de surface de ce catalyseur, mésurée par adsorption d'ammoniac à 320°C sous une pression de 300 mm de ce gaz, est caractérisée par le fait que la chaleur dégagée par cette adsorption est de préférence inférieure à 173/g (4 cal/g) de catalyseur ce qui permet d'éviter ultérieurement, lors de l'utilisation du catalyseur des polymérisations parasites et l'encrassement subséquent du catalyseur. Parmi les autres supports on peut choisir la silice, qui est particulièrement neutre ; la surface du catalyseur peut alors être comprise entre 1 et 300 m2/g.

Les catalyseurs au palladium peuvent contenir généralement de 0,01 à 1 % en poids de ce métal. Les catalyseurs au nickel contiennent généralement de 1 à 2 % en poids de ce métal.

Les catalyseurs peuvent être mis en oeuvre sous formes de billes, de concassés, de pastilles ou d'extrudés dont la dimension moyenne des grains peut-être comprise entre 1 et 6 mm et de préférence entre 2,5 et 4 mm de façon à conserver une bonne résistance mécanique.

Les catalyseurs peuvent être mis en oeuvre selon la technique du lit fixe ; le lit catalytique peut avoir, à titre illustratif et indicatif, suivant la nature des charges à traiter et la teneur en impuretés à éliminer, un rapport hauteur sur diamètre compris entre 1 et 8 et de préférence entre 2 et 5. On peut utiliser différents catalyseurs dans des zones de réaction différentes.

Par exemple, dans une première zone de réaction, le catalyseur utilisé, par exemple, palladium sur alumine, peut avoir avantageusement une teneur en palladium comprise entre 0,2 et 0,8 % en poids et un catalyseur utilisé dans une deuxième zone de réaction, quand il consiste en du palladium sur de l'alumine, peut contenir généralement de 0,05 à 0,4 % et de préférence de 0,1 à 0,3 % de palladium en poids.

Les catalyseurs du type de ceux qui ont été décrits précédemment, peuvent être utilisés par exemple pour l'hydrogénation sélective des hydrocarbures insaturés, notamment ceux qui renferment de 3 à 10 atomes de carbone par molécule. Ici, les catalyseurs renferment avantageusement du nickel ou des métaux nobles tels que le palladium. Ce type de procédé est décrit dans le brevet US-A-3674888. Le catalyseur est de préférence à base de palladium ou d'un composé de palladium déposé sur de l'alumine.

A titre indicatif, la proportion de composé de palladium exprimée en palladium, est ici, usuellement comprise entre 0,1 g et 3 g pour 100 g d'alumine.

D'autres métaux peuvent être présents, à titre d'additifs.

Le traitement d'hydrogénation sélective peut s'effectuer de préférence à une température de 0 à 80°C, sous une pression suffisante pour maintenir une phase liquide, et habituellement comprise entre 1 et 25 bar. Le rapport molaire hydrogéne/hydrocarbure insaturé est habituellement compris entre 1 et 5 (de préférence entre 1 et 2). Le débit horaire de charge est avantageusement compris entre 2 et 50 (de préférence entre 10 et 25) volumes liquides par volume de catalyseur.

On peut opérer avec un lit fixe de catalyseur, les réactifs circulant de bas en haut et de haut en bas.

Un tel procédé permet, par exemple, d'hydrogéner les hydrocarbures acétyléniques et/ou dioléfiniques, sans hydrogénation appréciable des hydrocarbures mono-éthyléniques. Il permet aussi d'hydrogéner les hydrocarbures acétyléniques et le butadiène-1-2 sans hydrogénation appréciable du butadiène-1-3.

Le brevet US-A-4347392 décrit également des opérations de raffinage mettant en oeuvre des catalyseurs qui pourront être traités conformément à l'invention. Ainsi pour être plus précis sur les opérations de raffinage mettant en oeuvre de tels catalyseurs on peut rappeler que ces opérations ont pour but l'hydrogénation sélective des impuretés d'une coupe éthylène et/ou propylène.

Les procédés de conversion d'hydrocarbures à haute température tels que, par exemple, le steam-cracking, produisent des hydrocarbures insaturés tels que, par exemple, l'éthylène, le propylène, le butadiène, les butènes, ainsi que des hydrocarbures bouillant dans la gamme des essences ; les hydrocarbures gazeux mono-oléfiniques à deux ou trois atomes de carbone obtenus par ce procédé, contiennent également une certaine quantité d'hydrocarbures a plus grand degré d'insaturation. La teneur de ces hydrocarbures varie en fonction de la sévérité du traitement de conversion mais est toujours trop faible pour que l'on envisage de les séparer et de les utiliser comme tels pour la pétrochimie. Cependant, leur présence à côté des hydrocarbures mono-oléfini ques rend difficile voire impossible, l'utilisation de ces

4

derniers pour la pétrochimie. C'est le cas pour la coupe éthylène ou la coupe propylène dont on doit éliminer aussi complétement que possible respectivement l'acétylène ou le propyne et le propadiène.

Pour obtenir du propylène pur, les procédés connus visent à hydrogéner aussi sélectivement que possible le propyne et le propadiène de la coupe $C_3$. Une charge typique provenant du steam-cracking renferme en poids 2 à 5 % de propane, 90 à 95 % de propylène , 2 à 3 % de propyne et 1 à 2 % de propadiène.

La pureté du propylène demandée pour les usages pétrochimiques ultérieurs correspond habituellement à moins de 10 ppm de la somme propyne + propadiène. De plus, on désire que le rendement en propylène soit au moins égal à 100 % et plus généralement supérieur à cette valeur dans la mesure où propyne et propadiène s'hydrogénent sélectivement en propylène.

Ici, un catalyseur d'hydrogénation sélective doit avoir deux qualités essentielles : une grande sélectivité de manière à hydrogéner sélectivement les impuretés acétyléniques, alléniques et dioléfiniques tout en évitant les réactions parasites d'hydrogénation des mono-oléfines et de polymérisation qui provoquent non seulement un diminution de rendement mais encore provoquent une désactivation du catalyseur.

Les catalyseurs les plus généralement utilisés jusqu'à présent sont, comme déjà indiqué plus haut, constitués par du palladium déposé sur un support d'alumine ou de silice.

Toutefois, avec des catalyseurs conventionnels, on obtient en général des teneurs en oligomères de 0,3 à 1 % en poids dans le produit sortant de l'hydrogénation. Dans US-A-4347392, on propose l'utilisation de catalyseurs qui ne présentent pas ces inconvénients, la teneur en oligomères formés restant le plus souvent inférieure à 0,2 % en poids dans le produit.

L'hydrogénation sélective peut être conduite à une température de 0 à 160°C environ. On peut opérer en phase gazeuse ou en phase liquide. Dans ce dernier cas, applicable en particulier à une coupe $C_3$, la pression doit être suffissante pour maintenir une phase liquide et l'on opère de préférence à 0-80°C sous 10 à 40 bars, à un débit liquide de 2 à 50, de préférence 10 à 30, volumes par volume de catalyseur et par heure. En phase gazeuse, le débit de coupe $C_2$ et/ou $C_3$ (VVH gaz) est, par exemple, de 500 à 20 000 volumes par volume de catalyseur et par heure et la pression, par exemple, de 5 à 30 bars.

Les catalyseurs traités conformément à l'invention conviennent également dans les procédés d'hydrogénation sélective d'une essence contenant à la fois des composés générateurs de gommes et des composés indésirables du soufre, en particulier des mercaptans et/ou du sulfure d'hydrogène ainsi qu'il est expliqué dans US-A-4208.271 et dans US-A-3770.619.

Dans US-A-4208271, on a proposé un procédé qui consiste en l'hydrogénation de l'essence, au moyen d'hydrogène gazeux, sur deux lits de catalyseurs distincts. L'essence et l'hydrogène passent d'abord sur un catalyseur comprenant du palladium métallique sur support puis sur un catalyseur comprenant du nickel métallique sur support, dans les conditions opératoires conventionelles de l'hydrogénation sélective des essences, d'est-à-dire, des conditions assurant une élimination au moins partielle mercaptans et/ou du sulfure d'hydrogène et une hydrogénation au moins partielle des composés générateurs de gommes (se traduisant par un abaissement de l'indice d'anhydride maléique ou MAV) sans hydrogénation excessive des mono-oléfines.

Ces conditions conventionnelles sont bien connues. Elles incluent notamment les conditions suivantes, données à titre d'exemple non limitatif :
- température : 30 - 250° C, de préférence 50 - 200° C ;
- pression totale : 10 - 100 bars, de préférence 20 - 50 bars ;
- vitesse spatiale ou rapport du volume de charge liquide (essence) au volume de catalyseur par heure (VVH) 0,5 - 10, de préférence 2 - 5 ;
- rapport molaire hydrogène/charge (essence) : 0,1 à 2, de préférence 0,5 à 1,5.

On opère de préférence avec des lits fixes de catalyseurs qui peuvent être disposés l'un derrière l'autre ou l'un au-dessus de l'autre, dans le même réacteur ou dans deux ou plusieurs réacteurs distincts.

Le premier catalyseur contient avantageusement 0,05 à 5 % en poids de Pd et de préférence de 0,1 à 0,5 %.

Le deuxième catalyseur peut contenir de 2 à 50 % en poids de nickel et de préférence 5 à 20 %.

Par emploi de palladium ou nickel métallique, on entend qu'au départ on utilise du palladium ou du nickel à l'état sensiblement réduit, à l'exclusion des mêmes métaux entièrement à l'état d'oxydes ou de sulfures. En cours d'opération, l'état exact du catalyseur est mal connu ; il peut notamment se produire une sulfuration limitée ou une faible adsorption de soufre. De nombreuses études ont été consacrées à ces phénomènes et il est inutile de les reprendre ici.

Les supports de catalyseur préférés sont les supports dits neutres, c'est-à-dire, ceux qui ne présentent qu'une acidité faible à nulle, la dite acidité pouvant être mesurée, par exemple, par le test d'adsorption d'ammoniac. (Journal of Catalysis, 2, 211-222, 1963).

Dans US-A-3770619, on avait proposé un procédé analogue pour la purification des essences de pyrolyse consistant essentiellement en des hydrocarbures ayant de 5 à 10 atomes de carbone par molécule et utilisé pour l'hydrogénation sélective des dioléfines et des alkényl-aromatiques et éventuellement pour une hydrogénation plus poussée de la charge comportant également une hydrogénation partielle des oléfines.

Dans le procédé appliqué aux essences de pyrolyse et mettant en oeuvre ou moins deux zones de réaction, les températures majeures de fonctionnement qui sont peu différentes dans chacune des deux zones de réaction, seront comprises entre 20 et 180°C et avantageusement entre 60 et 120°C. Les pressions appliquées dans la première zone de réaction sont comprises entre 5 et 50 et de préférence entre 15 et 35 bars, dans la deuxième zone de réaction, les pressions sont comprises entre 30 et 80 et de préférence entre 35 et 60 bars.

Les températures données ci-dessus dépendent de la charge que l'on soumet à l'hydrogénation, en particulier de la teneur en soufre de cette charge, et de la teneur en oxyde de carbone du gaz hydrogénant. Le rapport m, quantité d'hydrogène introduite sur quantité théoriquement nécessaire à l'hydrogénation des composés indésirables est généralement compris entre 1 et 10 et de préférence entre 2 et 7 pour la première zone de réaction, et entre 2 et 12, de préférence entre 4 et 10 pour la deuxième zone. Les vitesses spatiales (VVH) exprimées en litre des charge à hydrogéner par litre de catalyseur et par heure varient entre 5 et 50 de préférence entre 5 et 20.

EXEMPLE 1 :

Dans un premier test, on opère comme dans le brevet US-A-3674888. On prépare des agglomérés d'alumine de la manière suivante : on agglomère au drageoir de l'alumine humide pour la transformer en billes de 2 à 6 mm de diamètre. On traite ces billes par l'eau à 190°C pendant 6 heures, puis on les calcine à 800°C pendant 4 heures. On imprègne les billes par une solution aqueuse à 5 % en poids de nitrate de palladium, en quantité suffisante pour déposer 1 % en poids de palladium par rapport à l'alumine sèche.

On sèche, calcine à 450°C pendant 2 heures, puis conformément aux techniques conventionnelles, on réduit le catalyseur par un courant d'hydrogène à 100°C pendant 2 heures. On obtient un catalyseur A.

Le catalyseur obtenu présente les caractéristiques suivantes :

|  | Surface (m2/g) | Volume poreux (cm3/g) |
|---|---|---|
| catalyseur A | 60 | 0,58 |

Dans un deuxième test, on prépare un catalyseur comme dans le premier test. La seule différence consisite à réduire le catalyseur, non pas à l'aide d'hydrogène à 100°C mais à l'aide d'une solution aqueuse d'acide formique : on imprègne le catalyseur par cette solution, à 20°C, sous pression atmosphérique, de façon à ce que le catalyseur renferme 2 % en poids d'acide formique. Puis on élève à 120°C la température du catalyseur sous une pression de 3 bars et on maintient 2 heures ces conditions opératoires. Puis on sèche le catalyseur. On obtient un catalyseur A1 qui présente les mêmes caractéristiques que le catalyseur A.

On utilise ces deux catalyseurs A et A1 pour hydrogéner une coupe $C_4$ à 15°C, sous 15 bar de pression totale, avec un rapport molaire H2/impuretés de 3 et un débit horaire de 25 volumes liquides par volume de catalyseur.

La coupe $C_4$ renfermait 5 % d'hydrocarbures saturés, 5 % d'hydrocarbures mono-oléfiniques, 43,5 % de butadiène - 1-3 et 0,5 % d'hydrocarbures acétyléniques (méthylacétylène, éthylacétylène et vinylacétylène). On a obtenu les pourcentages relatifs suivants d'hydrogénation :

| Conversion % mol. | Catalyseurs A | A1 (selon l'invention) |
|---|---|---|
| Mono-oléfines | 0 | 0 |
| Butadiène | 1 | 1 |
| Acétyléniques | 98,0 | 98,0 |

On constate donc que le catalyseur de l'invention A1 est aussi actif et aussi sélectif que le catalyseur A.

EXEMPLE 2 :

Dans un premier test, on prépare un catalyseur en imprégnant, par une solution nitrique de nitrate de palladium, un support d'alumine, en billes de 2 mm de diamètre, d'une surface spécifique égale à 57 m2/g et d'un volume poreux total égal à 0,6 cm3/g, de manière à obtenir sur le catalyseur fini, une teneur de 0,3 % en poids de palladium. Après imprégnation, le catalyseur est séché à 120°C à l'étuve puis calciné à 900°C pendant deux heures dans un courant d'air.

Un échantillon du catalyseur est réduit par passage d'hydrogène à 100°C pendant deux heures ; il est ensuite examiné par microscopie électronique. On trouve une grosseur moyenne des cristallites de palladium de 8 nm. Le catalyseur est chargé dans un réacteur tubulaire et réduit in situ par passage d'hydrogène à 100° C pendant deux heures.

On opère dans les conditions opératoires suivantes :
- vitesse spatiale (VVH liquide) = 20
- pression = 20 bars
- température = 20°C
- H2/propyne + propadiène = 1,2 mole/mole.

Les analyses de la charge et du produi obtneu sont rassemblées dans le tableau suivant :

| Composé | Charge % poids | Produit % poids |
|---|---|---|
| Propane | 4,0 | 6,2 |
| Propylène | 91,5 | 93,65 |
| Propyne | 2,7 | indétectable |
| Propadiène | 1,8 | environ 8 ppm |
| Oligomères | - | 0,15 |
| Total | 100 | 100 |

Dans un deuxième test, on opère comme dans le premier test. Toutefois le catalyseur n'est pas réduit à l'hydrogène à 100° C pendant deux heures ; ici le catalyseur est réduit conformément à l'invention de la façon suivante :

Le catalyseur est traité par une solution aqueuse d'acide propionique ; on effectue l'imprégnation à 20° C sous pression atmosphérique, de façon à ce que le catalyseur renferme 2 % en poids d'acide propionique. On élève à 130°C la température du catalyseur sous une pression de 3,5 bars et on maintient ces conditions opératoires pendant deux heures. Puis on sèche le catalyseur et on l'utilise comme pour le premier test

Le produit obtenu a la composition suivante :

| | % poids |
|---|---|
| - propane | 6,2 |
| - propylène | 93,65 |
| - propyne | indétectable |
| - propadiène | environ 8 ppm |
| - oligomères | 0.15 |
| - Total | 100 |

On observe donc les mêmes résultats qu'avec le catalyseur réduit conventionnellement à l'hydrogène.

EXEMPLE 3 :

Dans un premier test, on prépare un catalyseur en imprégnant, par une solution nitrique de nitrate de palladium et de nitrate d'argent, un support d'alumine, en billes de 2 mm de diamètre, d'une surface spécifique égale à 10 m2/g et d'un volume poreux total égal à 96 cm3/g, de manière à obtenir sur le catalyseur fini, une teneur de 0,3 % en poids de palladium et 0,3 % d'argent. Après imprégnation, le catalyseur est séché à 120°C à l'étuve puis calciné à 450° C pendant deux heures dans un courant d'air.

Le catalyseur est chargé dans un réacteur tubulaire et réduit in situ par passage d'hydrogène à 100° C pendant deux heures.

On opère dans les conditions opératoires suivantes :
- vitesse spatiale (VVH liquide) = 30
- pression = 10 bars
- température = 40° C
- H2/butadiène = 1,8 mole/mole

Les analyses de la charge et du produit obtenu sont rassemblées dans le tableau suivant :

| Composé | Produit (% en poids) |
|---|---|
| Butène-1 | 27,24 |
| Butène-2 cis | 8,24 |
| Butène-2 tr | 13,42 |
| Butadiène | ≤ 10 ppm |
| Isobutène | 44,2 |
| Butane | 5,4 |
| Isobutane | 1,5 |
| Polymères | ≤ 20 ppm |

Le rendement pondéral en produit est pratiquement égal à 100%. On note ici une excellente sélectivité du catalyseur puisque le butène-1 est présent dans le produit à une teneur presque équivalente à celle de la charge (27,24 % contre 28 %). Le rendement en butène-1 est de 27,24/28 soit 97,3 %.

Dans un deuxième test, on opère comme dans le premier test. Toutefois le catalyseur n'est pas réduit à l'hydrogène à 100°C pendant deux heures ; ici le catalyseur est réduit conformément à l'invention de la façon suivante :

Le catalyseur est traité par une solution aqueuse d'acide formique ; on effectue l'imprégnation à 20° C sous pression atmosphérique, de façon à ce que le catalyseur renferme 2 % en poids d'acide formique. On élève à 130°C la température du catalyseur sous une pression de 3,5 bars et on maintient ces conditions opératoires pendant deux heures. Puis on sèche le catalyseur et on l'utilise comme pour le premier test. On obtient exactement les mêmes résultats que ceux obtenus dans le tableau ci-dessus.

EXEMPLE 4 :

La charge que l'on traite provient d'un steam-cracking de gas-oil et a les caractéristiques suivantes :

| Caractéristiques | Méthode | Résultats |
|---|---|---|
| Masse volumique à 15° C | NF T 60-101 | 0,859 |
| Distillation ASTM ° C | NF M 07-002 | |
| Point initial | | 55 |
| 50 % | | 111 |
| Point final | | 180 |
| Soufre total (ppm en poids) | NF M 07-014 | 1500 |
| Soufre H2S (ppm en poids) | | < 2 |
| Soufre mercaptan (ppm en poids) | NF M 07-031 | 70 |
| Corrosion lame de cuivre | NF M 07-015 | 1b |
| Essai au plombite (Docteur Test) | NF M 07-005 | positif |
| Indice de brome (g Br/100 g) | NF M 07-017 | 52 |
| Indice d'anhydride maléique (MAV) mg anhydride maléique/g | UOP 326-58 | 97 |
| Période d'induction (mn) avec 20 ppm en poids d'antioxydant (NN′-di-sec. Butyl-paraphenylene diamine) | NF M 07-012 | 20 |
| Indice d'octane "Recherche" (0,05 % en poids de plomb tétraéthyle) | NF M07-012 | 98 |

On fait passer cette essence, en mélange avec de l'hydrogène, dans un réacteur rempli exclusivement d'un catalyseur constitué par 10 % poids de nickel déposé de manière conventionnelle à partir de nitrate de nickel sur support d'alumine de 70 m2/g de surface spécifique. Avant l'emploi, le catalyseur est calciné à 450 °C pendant 2 heures puis réduit par l'hydrogène à 400 °C pendant 15 heures.

Les conditions opératoires sont les suivantes :

| | |
|---|---|
| - vitesse spatiale vol/vol/h | 2 |
| - température moyenne °C | 130 |
| - pression totale (bars) | 40 |
| - H2/charge (moles) | 0,5 |

Le produit obtenu après 100 heures de fonctionnement a les caractéristiques principales suivantes :

| | |
|---|---|
| Indice de brome g/100 g | 43 |
| MAV mg/g (indice d'anhydride maléique | 10 |
| Période d'induction (mn) avec 20 ppm en poids d'antioxydant | 480 |
| Soufre mercaptan (ppm en poids) | 6 |
| Soufre total (ppm en poids) | 1 500 |
| Corrosion lame de cuivre | 1a |
| Essai au plombite | négatif |
| Indice d'octane "Recherche" | 98 |

On observe que le produit est adouci par rapport à la charge et répond bien aux spécifications demandées pour les carburants auto habituels.

Dans une autre manipulation, on opére comme avec le catalyseur précédent. Toutefois; le catalyseur n'est pas réduit à l'hydrogène à 400°C pendant 15 heures, ici, le catalyseur est réduit conformément à l'invention de la façon suivante : le catalyseur est traité par une solution aqueuse d'acide propionique; on effectue l'impregnation à 20 °C sous pression atmosphérique, de façon à ce que le catalyseur renforce 2 % en poids d'acide propionique. On éleve à 130 °C la température du catalyseur sous une pression de 3,5 bars et on maintient ces conditions opératoires pendant deux heures. Puis on séche le catalyseur et on l'utilise comme précédemment. On obtient les mêmes résultats que ceux indiqués plus haut.

## Revendications

1. Procédé de réduction d'un catalyseur de raffinage renfermant un support et une phase active à base d'au moins un métal du groupe VIII

de la classification périodique des éléments caractérisé en ce que, avant la mise en oeuvre de ce catalyseur dans une zone de réaction de raffinage, on réalise un traitement en trois étapes conduites soit "in-situ", c'est-à-dire dans la zone de réaction, ou "ex-situ" c'est-à-dire en dehors de la zone de réaction, le dit traitement étant conduit en 3 étapes consistant :

(a) à imprégner le catalyseur entre 0 et 50°C, avec une solution aqueuse ou organique d'un composé qui est un agent réducteur choisi dans le groupe constitué par les aldéhydes renfermant 2 à 14 atomes de carbone par molécule (et de préférence 3 à 12 atomes de carbone), les cétones ou polycétones renfermant 3 à 18 (et de préférence 3 à 12) atomes de carbone par molécule, les éthers renfermant 2 à 14 (de préférence 3 à 12) atomes de carbone par molécule, les alcools ou polyalcools renfermant 1 à 14 atomes (et de préférence 2 à 12) de carbone par molécule et les acides organiques ou polyacides renfermant 1 à 14 (et de préférence 1 à 12 atomes de carbone par molécule), de façon à introduire 10 ppm à 100 % (en poids), de ce composé sur le catalyseur.

(b) à élever la température du catalyseur ainsi imprégné à une température comprise entre 100 et 150°C et sous une pression de 1 à 10 bars

(c) à sécher le catalyseur pour éliminer le solvant d'imprégnation et l'eau formée à l'étape (b).

2. Procédé selon la revendication 1 dans lequel à l'étape (a), la température d'imprégnation du composé agent réducteur est comprise entre 10 et 30 °C.

3. Procédé selon la revendication 1 dans lequel à l'étape (a), on introduit 10 ppm à 50 % en poids du dit composé agent réducteur sur le catalyseur.

**4.** Procédé selon l'une des revendication 1 à 3 dans lequel le métal du groupe VIII est choisi dans le groupe constitué par le fer, le cobalt et le nickel.

**5.** Procédé selon l'une des revendications 1 à 3 dans lequel le métal du groupe VIII est choisi dans le groupe constitué par le platine, le palladium, l'iridium, le ruthénium, le rhodium et l'osmium.

**6.** Procédé selon l'une des revendications 1 à 5 dans lequel on opère "ex-situ" c'est-à-dire, en dehors de la zone de réaction de raffinage.

**7.** Procédé selon l'une des revendications 1 à 6 dans lequel le composé agent réducteur est un aldéhyde.

**8.** Procédé selon l'une des revendications 1 à 6 dans lequel le composé agent réducteur est une cétone ou une polycétone.

**9.** Procédé selon l'une des revendications 1 à 6 dans lequel le composé agent réducteur est un éther.

**10.** Procédé selon l'une des revendications 1 à 6 dans lequel le composé agent réducteur est un alcool ou un polyalcool.

**11.** Procédé selon l'une des revendications 1 à 6 dans lequel le composé agent réducteur est un acide organique ou un polyacide organique.

**12.** Procédé selon l'une des revendications 1 à 11 dans lequel le catalyseur est disposé dans une enceinte et la température adéquate de craquage ou de décomposition du composé agent réducteur est obtenue par circulation dans la dite enceinte d'un courant de vapeur séche ou d'au moins un autre fluide inerte.

**13.** Procédé selon l'une des revendications 1 à 11 dans lequel la dite enceinte renfermant le lit de catalyseur est équipée de tubes creux parcourus par un fluide à l'aide duquel on règle la température nécessaire au dit procédé.

**14.** Procédé selon la revendication 13 dans lequel la dite enceinte est un four rotatif, agencé de façon à ce que pendant la rotation, les particules de catalyseur soient amenées à être régulièrement en contact avec les tubes creux de chauffage.

**15.** Procédé selon l'une des revendications 1 à 14 dans lequel le catalyseur renferme en outre un métal du groupe Ib choisi dans le groupe constitué par l'artent, l'or et le cuivre.

**16.** Utilisation du catalyseur traité selon le procédé de l'une des revendications 1 à 15 dans les réactions d'hydrogénation sélective des hydrocarbures insaturés.

**17.** Utilisation du catalyseur traité selon le procédé de l'une des revendications 1 à 15 dans les réactions d'hydrogénation sélective des hydrocarbures acétyléniques et/ou dioléfiniques.

**18.** Utilisation du catalyseur traité selon le procédé de l'une des revendications 1 à 15 dans les réactions d'hydrogénation sélective des essences.

**19.** Utilisation du catalyseur traité selon le procédé de l'une des revendications 1 à 15 dans les réactions d'hydrogénation sélective des essences contenant des composés générateurs de gommes.

**20.** Utilisation du catalyseur traité selon le procédé de l'une des revendications 1 à 15 dans les réactions d'hydrogénation d'effluents de pyrolyse.

**21.** Utilisation du catalyseur traité selon le procédé de l'une des revendications 1 à 15 dans les réactions d'hydrogénation de craquage.

**22.** Utilisation du catalyseur traité selon le procédé de l'une des revendications 1 à 15 dans les réactions d'hydrogénation de craquage à la vapeur.

**Claims**

1. A process for the reduction of a refining catalyst containing a support and an active phase based on at least one metal of group VIII of the periodic classification of elements, characterised in that, before the catalyst is used in a refining reaction zone, a treatment in three steps is carried out in situ, i.e. in the reaction zone, or ex situ, i.e. outside the reaction zone, the said treatment being conducted in three steps comprising:

   (a) impregnating the catalyst at between 0 and 50°C with an aqueous or organic solution of a compound that is a reducing agent chosen from the group consisting of aldehydes containing 2 to 14 (preferably 3 to 12) carbon atoms in the molecule, ketones or polyketones containing 3 to 13 (preferably 3 to 12) carbon atoms in the molecule, ethers containing 2 to 14 (preferably 3 to 12) carbon atoms in the molecule, alcohols or polyalcohols containing 1 to 14 (preferably 2 to 12) carbon atoms in the molecule and organic acids or polyacids containing 1 to 14 (preferably 1 to 12) carbon atoms in the molecule, in a manner so as to introduce from 10 ppm to 100% (by weight) of this compound onto the catalyst;

   (b) raising the temperature of the thus impregnated catalyst to a temperature between 100 and 150°C and under a pressure of 1 to 10 bars;

   (c) drying the catalyst to eliminate the impregnating solvent and the water formed in step (b).

2. A process according to Claim 1 in which, in step (a), the impregnation temperature of the reducing compound is between 10 and 30°C.

3. A process according to Claim 1 in which, in step (a), 10 ppm to 50% by weight of the said reducing compound is introduced onto the catalyst.

4. A process according to any one of Claims 1 to 3 in which the metal of group VIII is chosen from the group consisting of iron, cobalt and nickel.

5. A process according to any one of Claims 1 to 3 in which the metal of group VIII is selected from the group consisting of platinum, palladium, iridium, ruthenium, rhodium and osmium.

6. A process according to any one of Claims 1 to 5 in which the operation is ex situ, i.e. outside the refining reaction zone.

7. A process according to any one of Claims 1 to 6 in which the reducing agent is an aldehyde.

8. A process according to any one of Claims 1 to 6 in which the reducing agent is a ketone or a polyketone.

9. A process according to any one of Claims 1 to 6 in which the reducing agent is an ether.

10. A process according to any one of Claims 1 to 6 in which the reducing agent is an alcohol or a polyalcohol.

11. A process according to any one of Claims 1 to 6 in which the reducing agent is an organic acid or an organic polyacid.

12. A process according to any one of Claims 1 to 11 in which the catalyst is situated in an enclosure and the temperature sufficient to crack or decompose the reducing compound is obtained by circulation in the said enclosure of a current of dry steam or at least one other inert fluid.

13. A process according to any one of Claims 1 to 11 in which the said enclosure containing the bed of the catalyst is equipped with hollow tubes through which a fluid passes whereby the necessary temperature regulation of the said process is obtained.

14. A process according to Claim 13 in which the said enclosure is a rotary furnace arranged in such a manner that during rotation the catalyst particles are brought regularly into contact with the heating tubes.

**15.** A process according to any one of Claims 1 to 14 in which the catalyst contains inter alia a metal of group Ib selected from the group consisting of silver, gold and copper.

**16.** The use of a catalyst treated in accordance with the process of any one of Claims 1 to 15 in selective hydrogenation reactions of unsaturated hydrocarbons.

**17.** The use of a catalyst treated in accordance with the process of any one of Claims 1 to 15 in selective hydrogenation reactions of acetylenic and/or diolefinc hydrocarbons.

**18.** The use of a catalyst treated in accordance with the process of any one of Claims 1 to 15 in selective hydrogenation reactions of oils.

**19.** The use of a catalyst treated in accordance with the process of any one of Claims 1 to 15 in selective hydrogenation reactions of oils containing gum-forming compounds.

**20.** The use of a catalyst treated in accordance with the process of any one of Claims 1 to 15 in hydrogenation reactions of pyrolysis effluents.

**21.** The use of a catalyst treated in acordance with the process of any one of Claims 1 to 15 in hydrogenation and cracking reactions.

**22.** The use of a catalyst treated in accordance with the process of any one of Claims 1 to 15 in hydrogenation and steam-racking.

**Patentansprüche**

**1.** Verfahren zur Reduktion eines Raffinierungskatalysators der einen Träger und eine aktive Phase auf der Basis zumindest eines Metalls der Gruppe VIII des periodischen Systems beinhaltet,
dadurch gekennzeichnet,
daß man vor der Anwendung des Katalysators in einer Raffinierungs-Zone, eine Behandlung des Katalysators in drei Stufen, die gegebenenfalls "in-situ", d. h. innerhalb der Reaktionszone oder gegebenenfalls "ex-situ", d. h. außerhalb der Reaktionszone, stattfindet, durchführt, wobei diese drei Stufen die folgenden sind:
(a) Imprägnieren des Katalysators bei einer Temperatur zwischen 0 und 50°C mit einer wässrigen oder organischen Lösung einer Verbindung, die ein Reduktionsagens ist, das der Gruppe angehört, die aus Aldehyden mit 2 bis 14 Kohlenstoffatomen pro Molekül, vorzugsweise mit 3 bis 12 Kohlenstoffatomen, den Ketonen oder Polyketonen mit 3 bis 18 und vorzugsweise 3 bis 12 Kohlenstoffatomen pro Molekül, den Äthern mit 2 bis 14 und vorzugsweise 3 bis 12 Kohlenstoffatomen pro Molekül, den Alkoholen oder Polyalkoholen mit 1 bis 14 und vorzugsweise 2 bis 12 Kohlenstoffatomen pro Molekül und den organischen Säuren oder Poly-Säuren mit 1 bis 14 und vorzugsweise 1 bis 12 Kohlenstoffatomen pro Molekül, besteht, wobei man 10 ppm bis 100 Gew.-% der Verbindung in den Katalysator einführt,
(b) Erhöhung der Temperatur des solchermaßen imprägnierten Katalysators auf einen Wert zwischen 100 und 150°C bei einem Druck von 1 bis 10 bar,
(c) Trocknen des Katalysators zum Zwecke der Eliminierung des Imprägnierungs-Lösungsmittels sowie des in der Stufe (b) gebildeten Wassers.

**2.** Verfahren nach Anspruch 1,
dadurch gekennzeichnet,
daß die Imprägnierungstemperatur des Reduktions-Agens in der Stufe (a) im Bereich von 10 bis 30°C liegt.

**3.** Verfahren nach Anspruch 1,
dadurch gekennzeichnet,
daß man in der Stufe (a) 10 ppm bis 50 Gew.-% des Reduktionsagens in den Katalysator einführt.

**4.** Verfahren nach mindestens einem der Ansprüche 1 bis 3,
dadurch gekennzeichnet,

daß das Metall der Gruppe VIII des periodischen Systems der Elemente aus Eisen und/oder Kobalt und/oder Nickel besteht.

5.  Verfahren nach mindestens einem der Ansprüche 1 bis 3,
    dadurch gekennzeichnet,
    daß das Metall der Gruppe VIII des periodischen Systems der Elemente aus Platin und/oder Palladium und/oder Iridium und/oder Ruthenium und/oder Rhodium und/oder Osmium besteht.

6.  Verfahren nach mindestens einem der Ansprüche 1 bis 5,
    dadurch gekennzeichnet,
    daß man "ex-situ" arbeitet, d. h. außerhalb der Zone in der die Raffinierungsreaktion stattfindet.

7.  Verfahren nach mindestens einem der Ansprüche 1 bis 6,
    dadurch gekennzeichnet,
    daß das Reduktionsagens ein Aldehyd ist.

8.  Verfahren nach mindestens einem der Ansprüche 1 bis 6,
    dadurch gekennzeichnet,
    daß das Reduktionsagens ein Keton oder ein Polyketon ist.

9.  Verfahren nach mindestens einem der Ansprüche 1 bis 6,
    dadurch gekennzeichnet,
    daß das Reduktionsagens ein Äther ist.

10. Verfahren nach mindestens einem der Ansprüche 1 bis 6,
    dadurch gekennzeichnet,
    daß das Reduktionsagens ein Alkohol oder ein Polyalkohol ist.

11. Verfahren nach mindestens einem der Ansprüche 1 bis 6,
    dadurch gekennzeichnet,
    daß das Reduktionsagens eine organische Säure oder eine organische Polysäure ist.

12. Verfahren nach mindestens einem der Ansprüche 1 bis 11,
    dadurch gekennzeichnet,
    daß der Katalysator in einem Gefäß angeordnet ist und daß die für die Crackung oder die Zersetzung des Reduktionsagens notwendige Temperatur durch Zirkulation von trockenem Dampf oder zumindest eines anderen inerten Fluids innerhalb dieses Gefäßes erhalten wird.

13. Verfahren nach mindestens einem der Ansprüche 1 bis 11,
    dadurch gekennzeichnet,
    daß das Gefäß, das das Katalysatorbett enthält mit hohlen Röhren ausgestattet ist, durch die das Fluid fließt, mit dessen Hilfe man die für das Verfahren notwendige Temperatur einstellt.

14. Verfahren nach Anspruch 13,
    dadurch gekennzeichnet,
    daß das genannte Gefüß ein rotierfähiger Ofen ist, der in der Weise angeordnet ist, daß während der Rotation die Katalysatorpartikel geregelt in Kontakt mit den hohlen Heizröhren gebracht werden.

15. Verfahren nach mindestens einem der Ansprüche 1 bis 14,
    dadurch gekennzeichnet,
    daß der Katalysator zusätzlich ein Metall der Gruppe Ib des periodischen Systems der Elemente, nämlich Silber und/oder Gold und/oder Kupfer enthält.

16. Verwendung des Katalysators, der gemäß der Verfahren zumindest einer der Ansprüche 1 bis 15 behandelt wurde bei selektiven Hydrierungsreaktionen von ungesättigten Kohlenwasserstoffen.

17. Verwendung des Katalysators, der gemäß der Verfahren zumindest einer der Ansprüche 1 bis 15 behandelt wurde bei selektiven Hydrierungsreaktionen von azetylenischen und/oder diolefinischen Kohlenwasserstoffen.

18. Verwendung des Katalysators, der gemäß der Verfahren zumindest einer der Ansprüche 1 bis 15 behandelt wurde bei selektiven Hydrierungsreaktionen von Benzinen.

19. Verwendung des Katalysators, der gemäß der Verfahren zumindest einer der Ansprüche 1 bis 15 behandelt wurde bei selektiven Hydrierungsreaktionen von Benzinen, die Ausgangsverbindungen für die Gummiherstellung enthalten.

20. Verwendung des Katalysators, der gemäß der Verfahren zumindest einer der Ansprüche 1 bis 15 behandelt wurde bei Hydrierungsreaktionen von Pyrolyse-Effluents.

21. Verwendung des Katalysators, der gemäß der Verfahren zumindest einer der Ansprüche 1 bis 15 behandelt wurde bei Hydrierungsreaktionen von Crack-Produkten.

22. Verwendung des Katalysators, der gemäß der Verfahren zumindest einer der Ansprüche 1 bis 15 behandelt wurde bei Hydrierungsreaktionen von Crack-Produkten in der Dampfphase.